# EUROPÄISCHE PATENTSCHRIFT

(11) **EP 1 715 154 B1**
(45) Veröffentlichungstag und Bekanntmachung des Hinweises auf die Patenterteilung: **24.06.2009**
(21) Anmeldenummer: 06111169.6
(22) Anmeldetag: 15.03.2006
(51) Int. Cl.: F01N 3/28, F01N 7/16, F01N 7/18

(54) **Abgasbehandlungsvorrichtung für eine Abgasanlage**
Exhaust gas treating apparatus for an exhaust system
Dispositif de traitement de gaz d'échappement dans une ligne d'échappement

(30) Priorität: 18.04.2005 DE 102005017947
(43) Veröffentlichungstag der Anmeldung: 25.10.2006
(73) Patentinhaber: J. Eberspächer GmbH & Co. KG, 73730 Esslingen (DE)
(72) Erfinder: SCHLENKER, Friedrich, 73207, Plochingen (DE); RIEKERS, Ralf, 70182, Stuttgart (DE); PROMMERSBERGER, Holger, 71282, Hemmingen (DE)
(74) Vertreter: Bongen, Renaud & Partner

(56) Entgegenhaltungen:
- EP-A- 1 715 155
- EP-A1- 0 505 720
- EP-A2- 1 353 049
- AU-B2- 559 889
- DE-A1- 4 445 557
- DE-B- 1 190 770
- FR-A- 2 881 178
- JP-A- 2 070 390
- US-A- 4 703 885
- US-A1- 2004 213 707
- US-A1- 2004 258 583

## Beschreibung

Die vorliegende Erfindung betrifft eine Abgasbehandlungsvorrichtung für eine Abgasanlage einer Brennkraftmaschine, insbesondere in einem Kraftfahrzeug.

Derartige Abgasbehandlungsvorrichtungen umfassen üblicherweise ein Gehäuse, in dem zumindest ein Abgasbehandlungseinsatz angeordnet ist. Beispielsweise handelt es sich beim Abgasbehandlungseinsatz um ein Katalysatorelement. Bei modernen Brennkraftmaschinen ist tendenziell ein Ansteigen der Abgastemperaturen zu beobachten. Insbesondere bei motornah angeordneten Abgasbehandlungsvorrichtungen, wie z.B. ein Oxidationskatalysator, kann es zu hohen thermischen Belastungen kommen. Hierdurch entsteht die Gefahr einer vorzeitigen Materialermüdung, die zu einer Beschädigung der jeweiligen Abgasbehandlungsvorrichtung führen kann und deren Funktionsweise mehr oder weniger beeinträchtigt.

Aus der EP 0 505 720 A1 ist eine Abgasbehandlungsvorrichtung bekannt, die ein Gehäuse sowie eine Kartusche aufweist. Die Kartusche ist im Gehäuse angeordnet. Außerdem ist in der Kartusche zumindest ein Abgasbehandlungseinsatz gelagert.

Die vorliegende Erfindung beschäftigt sich mit dem Problem, für eine Abgasbehandlungsvorrichtung der eingangs genannten Art eine verbesserte Ausführungsform anzugeben, die sich insbesondere durch eine erhöhte Lebenszeit bzw. thermische Stabilität auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken; die Kartusche aus ferritischem Material und das Gehäuse - zumindest in einem zum Anschließen der Abgasbehandlungsvorrichtung an die Abgasanlage vorgesehenen Endabschnitt - aus einem austenitischen Material herzustellen. Ein ferritisches Material, z.B. ein ferritischer Stahl, eignet sich besonders gut für die Lagerung der Abgasbehandlungseinsätze. Austenitische Materialien, vorzugsweise austenitische Stähle, zeichnen sich durch eine besonders hohe Temperaturbeständigket aus.

Im Übrigen ist es vorteilhaft, den wenigstens einen Abgasbehandlungseinsatz in einer separat vom Gehäuse hergestellten Kartusche zu lagern, wobei die Kartusche ihrerseits im Gehäuse angeordnet ist. Der jeweilige Abgasbehandlungseinsatz wird auf diese Weise nicht unmittelbar im Gehäuse gelagert, sondern nur noch mittelbar über die Kartusche. Auf diese Weise ist es insbesondere möglich, das Gehäuse hinsichtlich der gewünschten thermischen Stabilität auszulegen, während die Kartusche hinsichtlich der Lagerung des jeweiligen Abgasbehandlungseinsatzes optimiert werden kann. Insbesondere lassen sich Kartusche und Gehäuse aus unterschiedlichen Materialien herstellen, was eine funktionsoptimierte Materialauswahl ermöglicht. Durch die so geschaffene Möglichkeit, Gehäuse und Kartusche hinsichtlich der jeweiligen Funktion zu optimieren, lässt sich insgesamt die Lebenszeit der Abgasbehandlungsvorrichtung erhöhen.

Darüber hinaus bildet die Kartusche mit dem wenigstens einen darin untergebrachten Abgasbehandlungseinsatz eine komplett vormontierbare Einheit, die beispielsweise entsprechende Lagermaterialien, mit denen der jeweilige Abgasbehandlungseinsatz in der Kartusche abgestützt ist, umfasst. Dies vereinfacht die Montage der Abgasbehandlungsvorrichtung, wodurch diese schneller und preiswerter realisierbar ist.

Besonders vorteilhaft ist eine Ausführungsform, bei welcher Außentrichter des Gehäuses aus dem austenitischen Material hergestellt sind.

Dementsprechend kann bei einer besonderen Ausführungsform der Abgasbehandlungsvorrichtung ein Bauteil der Abgasbehandlungsvorrichtung, das aus austenitischem Material hergestellt ist, an einem anderen Bauteil der Abgasbehandlungsvorrichtung, das aus ferritischem Material hergestellt ist, befestigt sein, wobei hierzu zweckmäßig zumindest eine Schweißnaht vorgesehen wird. Bei einer bevorzugten Weiterbildung kann nun eine Schweißnaht, die ein austenitisches Bauteil mit einem ferritischen Bauteil verbindet, aus einem Schweißmaterial bestehen, dessen thermischer Ausdehnungskoeffizient zwischen den thermischen Ausdehnungskoeffizienten des Austenitmaterials und des Ferritmaterials liegt. Hierdurch können thermisch bedingte Spannungen reduziert und ausgeglichen werden, wodurch sich die thermische Stabilität der Verbindung zwischen den beiden Bauteilen verbessert und sich die Lebenszeit der Abgasbehandlungsvorrichtung zusätzlich erhöht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 bis 3: Längsschnitte durch erfindungsgemäße Abgasbehandlungsvorrichtungen bei unterschiedlichen Ausführungsformen,
- Fig. 4 und 5: Ausschnitte stark vereinfachter Längsschnitte weitere Ausführungsformen der Abgasbehandlungsvorrichtung nach der Erfindung.

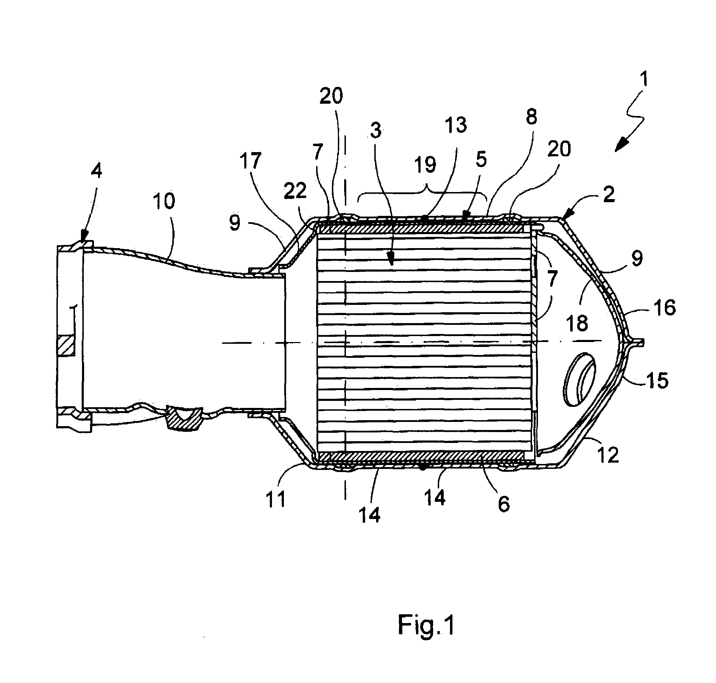

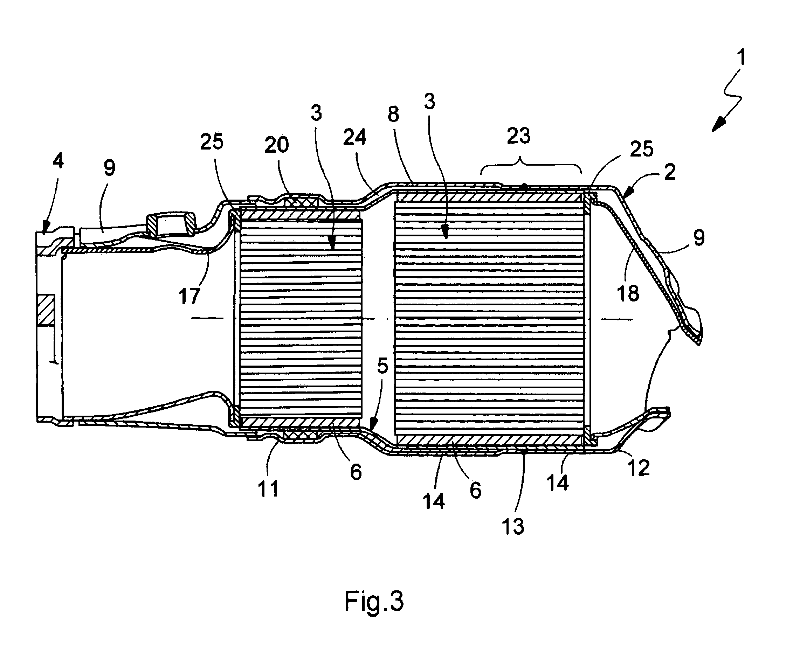

Entsprechend den Fig. 1 bis 5 umfasst eine erfindungsgemäße Abgasbehandlungsvorrichtung 1 ein Gehäuse 2 sowie zumindest einen Abgasbehandlungseinsatz 3, der im Gehäuse 2 angeordnet ist. Bei den Ausführungsformen der Fig. 1, 2, 4 und 5 ist jeweils nur ein Abgasbehandlungseinsatz 3 vorgesehen. Fig. 3 zeigt eine Variante mit zwei Abgasbehandlungseinsätzen 3. Ebenso sind Ausführungsformen mit mehr als zwei Abgasbehandlungseinsätzen 3 möglich. Beim jeweiligen Abgasbehandlungseinsatz 3 kann es sich beispielsweise um ein Partikelfilterelement, ein Katalysatorelement, ein Schalldämpferelement oder um eine Kombination aus wenigstens zwei der genannten Elemente handeln.

Die Abgasbehandlungsvorrichtung 1 ist zum Einbau in eine in den Fig. 1 bis 3 teilweise angedeutete Abgasanlage 4 vorgesehen, die zu einer nicht gezeigten Brennkraftmaschine gehört und im Betrieb deren Abgase abführt. Vorzugsweise ist diese Brennkraftmaschine zusammen mit der Abgasanlage 4 in einem Kraftfahrzeug angeordnet. Da sich die erfindungsgemäße Abgasbehandlungsvorrichtung 1 aufgrund der nachfolgend näher erläuterte Merkmale durch eine besonders hohe Temperaturbeständigkeit auszeichnet, eignet sie sich insbesondere für eine motornahe Montage innerhalb der Abgasanlage 4. Beispielsweise handelt es sich somit bei der Abgasbehandlungsvorrichtung 1 um einen motornahen Oxidationskatalysator.

Erfindungsgemäß ist die Abgasbehandlungsvorrichtung 1 außerdem mit einer Kartusche 5 ausgestattet, in welcher der jeweilige Abgasbehandlungseinsatz 3 gelagert ist und die im Gehäuse 2 angeordnet ist. Hierdurch wird über die Kartusche 5 eine indirekte Lagerung des jeweiligen Abgasbehandlungseinsatzes 3 im Gehäuse 2 erreicht. Dies ermöglicht beispielsweise für die Herstellung des Gehäuses 2 die Verwendung eines Materials mit hoher Temperaturbeständigkeit, das für die Lagerung des jeweiligen Abgasbehandlungseinsatzes 3 ungeeignet ist. Im Unterschied dazu kann die Kartusche 5 ohne weiteres aus einem für die Lagerung des jeweiligen Abgasbehandlungseinsatzes 3 geeigneten Material hergestellt werden, das an sich eine reduzierte thermische Beständigkeit aufweist und bei hohen Temperaturen nicht hinreichend stabil ist, um beispielsweise das Gehäuse 2 aus diesem Material herzustellen. Vorzugsweise besteht die Kartusche 5 aus einem ferritischen Material. Grundsätzlich können alle anderen Komponenten der Abgasbehandlungsvorrichtung 1, also insbesondere das gesamte Gehäuse 2, aus einem austenitischen Material bestehen.

Als Ferritmaterial eignet sich in besondere Weise ein ferritischer Stahl, insbesondere ein Stahl der Sorte 1.4509 oder 1.4510 oder 1.4512 oder 1.4513. Die im vorliegenden Zusammenhang verwendeten Werkstoffnummern beziehen sich auf die Europäische Norm EN 10027-2: 1992. Als Austenitmaterial kommt vorzugsweise ein austenitischer Stahl in Frage, insbesondere ein Stahl der Sorte 1.4828 oder 1.4818 oder 1.4541 oder 1.4301 oder 1.4835 oder 1.4841.

In der Kartusche 5 ist der jeweilige Abgasbehandlungseinsatz 3 mit geeigneten Lagermaterialien gelagert. Beispielsweise ist der Abgasbehandlungseinsatz 3 mit einer Lagermatte 6 aus einem geeigneten Lagermaterial umwickelt. Desweiteren können beispielsweise Gestrickkissen 7 vorgesehen sein, um den Abgasbehandlungseinsatz 3 innerhalb der Kartusche 5 oder gegenüber anderen Komponenten der Abgasbehandlungsvorrichtung 1 abzustützen. Zusätzlich oder alternativ kann ein derartiges Gestrickkissen 7 als Kantenschutz für empfindliche Kanten des jeweiligen Abgasbehandlungseinsatzes 3 dienen. Zum Beispiel dann, wenn es sich beim Abgasbehandlungseinsatz 3 um einen monolithischen Keramikkörper handelt. Ebenso kann das jeweilige Gestrickkissen 7 beispielsweise anströmseitig der jeweiligen Lagermatte 6 angeordnet sein, um diese vor einer direkten Beaufschlagung mit heißen Abgasen zu schützen.

Vorzugsweise bildet die Kartusche 5 mit dem wenigstens einen darin untergebrachten Abgasbehandlungseinsatz 3 sowie gegebenenfalls mit entsprechenden Lagermaterialien eine komplett vormontierbare Einheit. Eine derartige Einheit kann unabhängig vom Gehäuse 2 hergestellt werden und kann bei der Montage der Abgasbehandlungsvorrichtung 1 als Ganzes in das Gehäuse 2 eingesetzt werden. Die Großserienfertigung der Abgasbehandlungsvorrichtung 1 kann durch vereinfacht und kostengünstiger gestaltet werden.

Entsprechend Fig. 1 umfasst das Gehäuse 2 grundsätzlich einen Mantel 8, der die Kartusche 5 umhüllt sowie zwei Außentrichter 9, von denen der eine ein Einlasstrichter und der andere ein Auslasstrichter ist. Die Anbindung der Abgasbehandlungsvorrichtung 1 an die Abgasanlage 4 kann über ein Zwischenrohr 10 erfolgen, das - je nach Betrachtungsweise - ein Bestandteil der Abgasanlage 4 oder ein Bestandteil der Abgasbehandlungsvorrichtung 1 und somit des Gehäuses 2 ist.

Im Ausführungsbeispiel gemäß Fig. 1 weist das Gehäuse 2 wenigstens zwei Gehäuseteile 11 und 12 auf. Diese Gehäuseteile 11, 12 sind bei der hier gezeigten Ausführungsform über eine gemeinsame Schweißnaht 13 sowohl aneinander als auch an der Kartusche 5 befestigt. Ebenso ist es möglich, die beiden Gehäuseteile 11, 12 jeweils für sich an der Kartusche 5 zu befestigen, beispielsweise mittels separater Schweißnähte, wobei dann die Gehäuseteile 11, 12 über die Kartusche 5 aneinander befestigt sind.

Bei der hier gezeigten, speziellen Ausführungsform weisen beide Gehäuseteile 11, 12 jeweils einen der Außentrichter 9 sowie einen Mantelabschnitt 14 auf. Die beiden Mantelabschnitte 14 bilden gemeinsam den Mantel 8. Desweiteren kann zumindest eines dieser Gehäuseteile, hier z.B. das links dargestellte Gehäuseteil 11, aus einem Stück hergestellt sein. Ebenso ist es möglich, zumindest eines der Gehäuseteile, z.B. das rechts gezeigte Gehäuseteil 12, aus zwei Halbschalen 15, 16 herzustellen.

Die Abgasbehandlungsvorrichtung 1 ist hier außerdem mit zwei Innentrichtern 17, 18 ausgestattet, die zweckmäßig beabstandet zum jeweiligen Außentrichter 9 angeordnet sind, um hierdurch eine effektive Spaltisolierung zu realisieren. Bei der hier gezeigten Ausführungsform ist einer der Innentrichter, hier der links dargestellte Innentrichter 17, an der Kartusche 5 ausgebildet. Zweckmäßig ist dabei die Kartusche 5 aus einem Stück hergestellt, so dass besagter Innentrichter 17 einen integralen Bestandteil der Kartusche 5 bildet. Beim an der Kartusche 5 ausgebildeten Innentrichter 17 handelt es sich beispielsweise um den einlassseitigen Innentrichter 17.

Die Kartusche 5 ist hier mit Hilfe der Schweißnaht 13 am Gehäuse 2 befestigt. Üblicherweise ist diese Schweißnaht 13 in Umfangsrichtung geschlossen ausgestaltet. Im vorliegenden Fall ist die Schweißnaht 13 bezüglich des Abgasbehandlungseinsatzes 3 im wesentlichen axial mittig angeordnet. Bezüglich der axialen Länge der Kartusche 5, die hier um die axiale Länge des daran angeformten Innentrichter 17 verlängert ist, befindet sich die Schweißnaht 13 in einem axial mittleren Bereich 19 der Kartusche 5, der hier durch eine geschweifte Klammer angedeutet ist. Dieser mittlere Bereich 19 nimmt vorzugsweise zwischen 30% und 50% der gesamten axialen Länge der Kartusche 5 ein. Die zentral angeordnete Schweißnaht 13 bildet dabei eine art Festlager, während die Kartusche 5 im Übrigen lose, also grundsätzlich axial beweglich im Gehäuse 2 angeordnet ist. Auf diese Weise können thermisch bedingte Relativbewegungen zwischen Kartusche 5 und Gehäuse 2 stattfinden, ohne dass es dabei zu Spannungen kommt. Die Kartusche 5 ist im Gehäuse 2 beabstandet zur Schweißnaht 13 zusätzlich mittels weiterer Gestrickkissen 20 am Gehäuse 2 abgestützt. Die Gestrickkissen 20, Z.B. aus Draht, bewirken hier insbesondere eine akustische Verbesserung der Abgasbehandlungsvorrichtung 1. Beispielsweise dämpfen diese Gestrickkissen 20 Schwingungen oder Vibrationen der Kartusche 5 relativ zum Gehäuse 2.

Die Außentrichter 9 sind vorzugsweise aus austenitischem Material hergestellt und dienen zur Anbindung der Abgasbehandlungsvorrichtung 1 bzw. des Gehäuses 2 an die Abgasanlage 4. Üblicherweise ist auch die Abgasanlage 4 im Bereich der Anbindung an die Abgasbehandlungsvorrichtung 1 austenitisch. Im vorliegenden Fall sind der Mantel 8 bzw. die Mantelabschnitte 14 einstückig mit den Außentrichter 9 hergestellt, somit sind auch die Mantelabschnitte 14 und somit der komplette Mantel 8 hier austenitisch. Im Unterschied dazu ist die Kartusche 5 sowie der damit einstückig ausgestaltete Innentrichter 17 aus ferritischem Material hergestellt. Der andere Innentrichter 18 kann grundsätzlich aus einem beliebigen, geeigneten Material, insbesondere aus einem austenitischen oder aus einem ferritischen Material hergestellt sein.

Da Austenitmaterial und Ferritmaterial unterschiedliche thermische Ausdehnungskoeffizienten aufweisen, kann es bei hohen Abgastemperaturen zu relativ großen Dehnungsunterschieden kommen. Da der Abgasbehandlungseinsatz 3 ausschließlich in der Kartusche 5 gelagert ist, wirken sich diese thermisch bedingten Ausdehnungen nicht auf die Qualität der Lagerung des Einsatzes 3 aus. Darüber hinaus ist die Gefahr überhöhter Spannungen zwischen dem Gehäuse 2 und der daran befestigten Kartusche 5 durch die gewählte Befestigung deutlich reduziert, da sich Kartusche 5 und Gehäuse 2 beiderseits der Schweißnaht 13 unabhängig voneinander axial ausdehnen können.

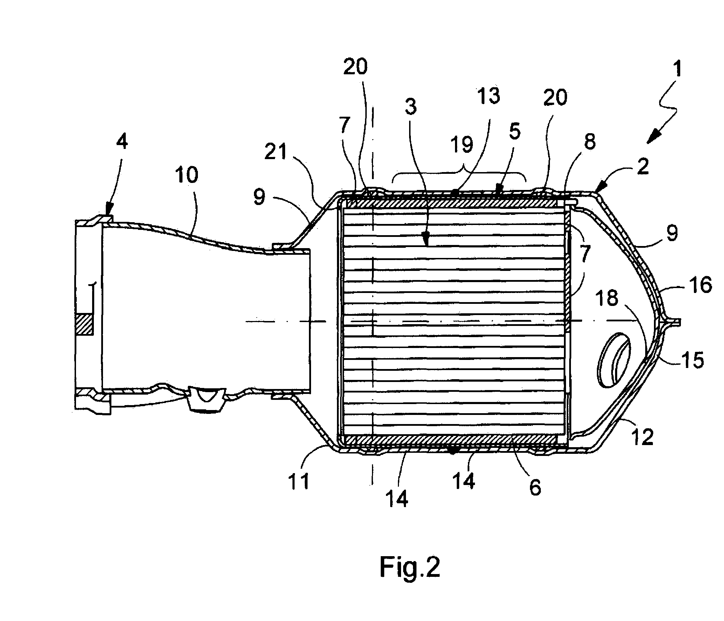

Die in Fig. 2 gezeigten Ausführungsform unterscheidet sich von derjenigen gemäß Fig. 1 lediglich dadurch, dass an der Kartusche 5 kein Innentrichter 17 ausgeformt ist. Dafür ist die Kartusche 5 hier an einem ihrer axialen Enden mit einem Ringkragen 21 ausgestattet, der radial nach innen absteht. Dabei ist dieser Ringkragen 21 - ebenso wie eine Ringstufe 22 des gemäß Fig. 1 an der Kartusche 5 ausgebildeten Innentrichters 17 - so dimensioniert, dass er eine Gasströmung in den Ringraum zwischen dem Einsatz 3 und der Kartusche 5 behindert. Die lichte Weite des Ringkragens 21 (bzw. der Ringstufe 22) ist dabei etwa gleichgroß wie der Außendurchmesser des Einsatzes 3.

Entsprechend Fig. 3 dient die Kartusche 5 bei dieser Ausführungsform zur Lagerung von zwei Abgasbehandlungseinsätzen 3, die sich hier durch ihre axiale und durch ihre radiale Erstreckung voneinander unterscheiden. Insoweit ergibt sich hier ein gestufter Verlauf, der sich durch einen reduzierten Strömungswiderstand auszeichnet. Grundsätzlich können die Einsätze 3 jedoch auch identisch ausgestaltet sein. Auch hier ist die Kartusche 5 mit einer Schweißnaht 13 am Gehäuse 2 befestigt. Auch hier ist diese Schweißnaht 13 von den axialen Enden der Kartusche 5 beabstandet angeordnet. Allerdings erfolgt die Befestigung der Kartusche 5 am Gehäuse 2 hier innerhalb eines axialen Endbereichs 23, der durch eine geschweifte Klammer angedeutet ist. Dieser Endbereich 23 erstreckt sich gemessen vom zugehörigen axialen Ende der Kartusche 5 vorzugsweise über maximal 25% der gesamten axialen Länge der Kartusche 5. Auf diese Weise wird innerhalb dieses Endbereichs 23 eine Art Festlager für die Kartusche 5 im Gehäuse 2 realisiert. Abgesehen von der Schweißnaht 13 ist die Kartusche 5 im Übrigen nicht weiter am Gehäuse 2 befestigt, sondern gegenüber dem Gehäuse 2 axial beweglich angeordnet. Somit sind auch hier Relativbewegungen zwischen dem Gehäuse 2 und der Kartusche 5 ausgehend von der Schweißnaht 13 möglich. Derartige Relativbewegungen sind in der Regel thermisch bedingt.

Außerhalb des Endbereichs 23 ist radial zwischen dem Gehäuse 2 bzw. dem Mantel 8 und der Kartusche 5 ein umfangsmäßig umlaufender Abstand 24 ausgebildet, der wieder zu einer effektiven Spaltisolierung führt. In einem von der Schweißnaht 13 entfernten Endbereich ist die Kartusche 5 umfangsmäßig wieder über ein Gestrickkissen 20 am Gehäuse 2 bzw. an dessen Mantel 8 abgestützt. Auch dieses Gestrickkissen 20 bewirkt eine intensive Dämpfung von Schwingungen, die im Betrieb zwischen Kartusche 5 und Gehäuse 2 auftreten.

Die Kartusche 5 ist hier an ihren axialen Enden außerdem mit Halteringen 25 ausgestattet, die auf geeignete Weise an der Kartusche 5 befestigt sind, beispielsweise mittels entsprechender Schweißnähte oder Schweißpunkte. Die Halteringe 25 können dabei auch als Gestrickkissen ausgestaltet sein. Die Halteringe 25 dienen zur Halterung der Innentrichter 17 bzw. 18 beanstandet zum jeweiligen Außentrichter 9.

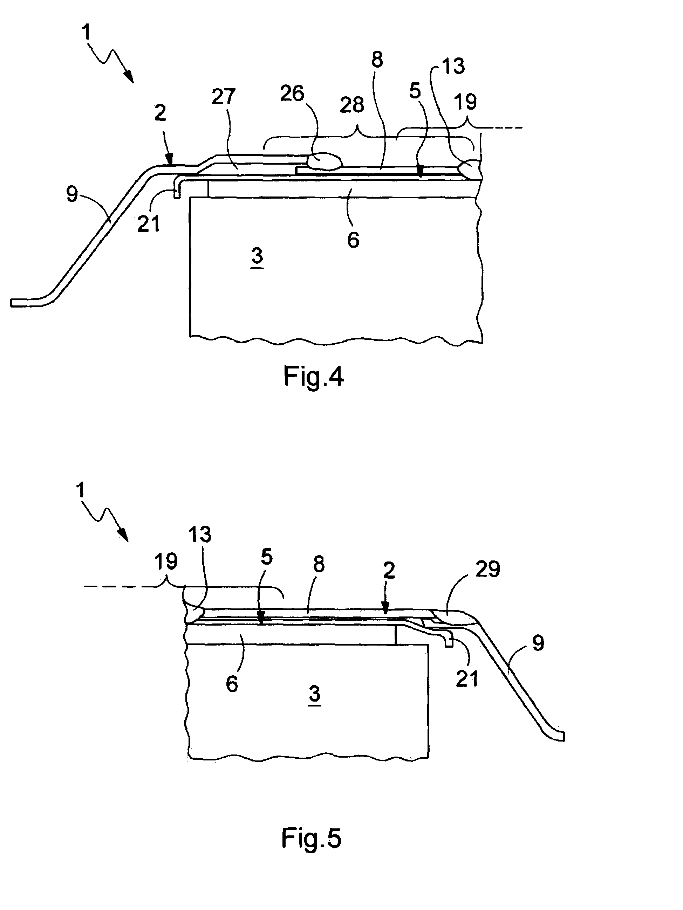

Bei der in Fig. 4 gezeigten Ausführungsform ist die Kartusche 5 wieder mit einem Ringkragen 21 ausgestattet, der eine direkte Beaufschlagung des Lagermaterials, hier der Lagermatte 6 mit heißen Abgasen behindert. Im Unterschied zu den zuvor beschriebenen Ausführungsformen ist hier der jeweilige Außentrichter 9 nicht als integraler Bestandteil eines anderen Gehäuseteils ausgestaltet. Im vorliegenden Fall ist der Außentrichter 9 ein separates Bauteil, das am Mantel 8 befestigt ist. Ferner ist der Außentrichter 9 über eine Schweißnaht 26 am Mantel 8 befestigt. Bei der hier gezeigten Ausführungsform ist diese Schweißnaht 26 von den axialen Enden der Kartusche 5 axial beabstandet angeordnet. Insbesondere, wenn es sich hierbei um den anströmseitigen Außentrichter 9 handelt, befindet sich diese Schweißnaht 26 in einem Bereich reduzierter Temperatur. Dementsprechend ist diese Schweißnaht 26 im Betrieb der Abgasbehandlungsvorrichtung 1 nur einer reduzierten thermischen Belastung ausgesetzt, wodurch sich automatisch deren Standfestigkeit erhöht. Zusätzlich ist hier zur thermischen Isolierung der Schweißnaht 26 ein radialer Abstand 27 zwischen dem Außentrichter 9 und der Kartusche 5 ausgebildet, der zu einer effektiven Spaltisolierung führt. Die Positionierung der Schweißnaht 26 erfolgt zweckmäßig in einem durch eine geschweifte Klammer symbolisierten Längsbereich 28, der gemessen von dem dem Außentrichter 9 zugewandten axialen Ende der Kartusche 5 vorzugsweise zwischen 20% und 50% der gesamten axialen Länge der Kartusche 5 einnimmt. Im vorliegenden Fall ist die Schweißnaht 26 etwa mittig zwischen dem durch den Ringkragen 21 gebildeten axialen Ende und der Schweißnaht 13 angeordnet. Sofern die Schweißnaht 13 wie hier vorzugsweise axial mittig zur Kartusche 5 angeordnet ist, befindet sich die Schweißnaht 26 dann dementsprechend bei etwa 25% der vom Ringkragen 21 angemessen axialen Länge der Kartusche 5.

Da die Schweißnaht 26 aufgrund der gewählten Anordnung nur reduzierten thermischen Belastungen ausgesetzt ist, ergibt sich hier die Möglichkeit, den Mantel 8 aus ferritischem Material herzustellen, während der Außentrichter 9 aus austenitischem Material besteht. Optional kann die Schweißnaht 26 wieder aus einem Schweißmaterial hergestellt sein, dessen thermischer Ausdehnungskoeffizient zwischen den thermischen Ausdehnungskoeffizienten des Ferritmaterials und des Austenitmaterials liegt.

Bei der Ausgestaltung mit ferritischem Mantel 8 ergibt sich im Bereich der Schweißnaht 13 nur eine geringe thermische Belastung, da auch die Kartusche 5 vorzugsweise aus ferritischem Material besteht.

Ebenso ist es möglich, den Mantel 8 aus einem austenitischen Material herzustellen. Die Schweißverbindung 26 ist dann ebenfalls zweckmäßig austenitisch ausgeführt. Im Unterschied dazu wird für die Schweißnaht 13 wieder eine Ausführungsform bevorzugt, bei der das Schweißmaterial einen thermischen Ausdehnungskoeffizienten aufweist, der zwischen den thermischen Ausdehnungskoeffizienten des Austenitmaterials und des Ferritmaterials liegt.

Bei der in Fig. 5 gezeigten Ausführungsform ist wieder ein separat hergestellter Außentrichter 9 vorgesehen, bei dem es sich vorzugsweise um einen auslassseitigen Außentrichter 9 handelt. Dieser Außentrichter 9 ist am axialen Ende des Mantels 8, also im Bereich eines axialen Endes der Kartusche 5 angeordnet. Zweckmäßig ist auch hier eine Schweißnaht 29 vorgesehen, um den Außentrichter 9 am Mantel 8 zu befestigen. Vorzugsweise sind Mantel 8 und Außentrichter 9 austenitisch, während die Kartusche 5 ferritisch ausgestaltet ist. Die Schweißnaht 13 besteht vorzugsweise wieder aus einem Schweißmaterial, dessen thermischer Ausdehnungskoeffizient zwischen den thermischen Ausdehnungskoeffizienten des Ferritmaterials und des Austenitmaterials liegt.

Durch die von den axialen Enden beabstandete Anordnung der Schweißnaht 13 und insbesondere durch die mittige Anordnung der Schweißnaht 13 bezüglich der axialen Erstreckung der Kartusche 5 befindet sich die Schweißnaht 13 an einem Ort reduzierte thermischer Belastung. Dies hat zur Folge, dass diese Schweißnaht 13 an sich bereits eine erhöhte thermische Dauerfestigkeit aufweist. In Kombination mit einem speziellen Schweißmaterial, dessen thermischer Ausdehnungskoeffizient zwischen denjenigen des Ferritmaterials und des Austenitmaterials liegt, kann eine beträchtliche Erhöhung der Lebenszeit für die Abgasbehandlungsvorrichtung 1 erreicht werden.

Diejenigen Schweißnähte 13, 26, die zum Verbinden eines austenitischen Bauteils mit einem ferritischen Bauteil dienen, bestehen aus einem Schweißmaterial, dessen thermischer Ausdehnungskoeffizient zwischen denjenigen von Austenit und Ferrit liegt. Vorzugsweise bildet das Schweißmaterial nach dem Aushärten der jeweiligen Schweißnaht 13, 26 ein Zwei-Phasen-Material, das sowohl eine Ferritphase als auch eine Austenitphase aufweist. Zum Herstellen der Schweißnaht 13, 26 kann z.B. ein Zwei-Phasen-Material oder Duplexmaterial verwenden werden, insbesondere der Sorte 1.4462 oder 1.4362 oder 1.4162 oder 1.4501 oder 1.4820 oder 1.4821 oder Avesta 2101. Alternativ kann auch ein Material verwendet werden, das erst beim Schweißvorgang zusammen mit dem aufgeschmolzenen Grundmaterial (Austenit oder Ferrit) das Zwei-PhasenSystem ausbildet. Beispielsweise eigenen sich bei austenitischem Grundmaterial Schweißstoffe der Sorte 1.4511 oder 1.4510, was ferritische Schweißstoffe sind.

Zweckmäßig ist das Schweißmaterial so gewählt, dass sein thermischer Ausdehnungskoeffizient etwa mittig zwischen den thermischen Ausdehnungskoeffizienten des Ferritmaterials und des Austenitmaterials liegt.

## Patentansprüche

1. Abgasbehandlungsvorrichtung für eine Abgasanlage (4) einer Brennkraftmaschine, insbesondere in einem Kraftfahrzeug,
- mit einem Gehäuse (2), in dem wenigstens ein Abgasbehandlungseinsatz (3) angeordnet ist,
- wobei eine Kartusche (5) vorgesehen ist, die im Gehäuse (2) angeordnet ist und in der der wenigstens eine Abgasbehandlungseinsatz (3) gelagert ist,
**dadurch gekennzeichnet,**
- **dass** die Kartusche (5) aus ferritischem Material besteht,
- **dass** das Gehäuse (2) zumindest in einem zum Anschließen der Abgasbehandlungsvorrichtung (1) an die Abgasanlage (4) vorgesehenen Endabschnitt aus einem austenitischen Material besteht.

2. Abgasbehandlungsvorrichtung nach Anspruch 1,
**dadurch gekennzeichnet,**
**dass** das Gehäuse (2) zumindest einen Außentrichter (9) aufweist, der aus einem austenitischen Material besteht.

3. Abgasbehandlungsvorrichtung nach Anspruch 1 oder 2,
**dadurch gekennzeichnet,**
**dass** das Gehäuse (2) einen Mantel (8) aufweist, der aus einem austenitischen oder aus einem ferritischen Material besteht.

4. Abgasbehandlungsvorrichtung nach einem der Ansprüche 1 bis 3,
**dadurch gekennzeichnet,**
**dass** zumindest eine Schweißnaht (13, 26), die ein Bauteil (9, 8) der Abgasbehandlungsvorrichtung aus austenitischem Material mit einem Bauteil (8, 5) der Abgasbehandlungsvorrichtung aus ferritischem Material verbindet, aus einem Schweißmaterial besteht, dessen thermischer Ausdehnungskoeffizient zwischen den thermischen Ausdehnungskoeffizienten des Austenitmaterials und des Ferritmaterials liegt.

5. Abgasbehandlungsvorrichtung nach einem der Ansprüche 1 bis 4,
**dadurch gekennzeichnet,**
**dass** die Kartusche (5) aus einem Stück hergestellt ist.

6. Abgasbehandlungsvorrichtung nach einem der Ansprüche 1 bis 5,
**dadurch gekennzeichnet,**
**dass** die Kartusche (5) zumindest einen im Inneren des Gehäuses (2) angeordneten Innentrichter (17) aufweist.

7. Abgasbehandlungsvorrichtung nach einem der Ansprüche 1 bis 6,
**dadurch gekennzeichnet,**
**dass** die Kartusche (5) zumindest einen radial nach innen abstehenden Ringkragen (21) aufweist.

8. Abgasbehandlungsvorrichtung nach einem der Ansprüche 1 bis 7,
**dadurch gekennzeichnet,**
**dass** die Kartusche (5) mittels wenigstens einer Schweißnaht (13) am Gehäuse (2) befestigt ist, die von den axialen Enden der Kartusche (5) axial beabstandet angeordnet sein kann.

9. Abgasbehandlungsvorrichtung nach Anspruch 8,
**dadurch gekennzeichnet,**
**dass** die wenigstens eine Schweißnaht (13) in einem axial mittleren Bereich (19) der Kartusche (5) angeordnet ist, der z.B. maximal 50% oder maximal 30% der gesamten axialen Länge der Kartusche (5) beträgt.

10. Abgasbehandlungsvorrichtung nach einem der Ansprüche 1 bis 8,
**dadurch gekennzeichnet,**
**dass** die Kartusche (5) in einem ihrer axialen Endbereiche (23) am Gehäuse (2), insbesondere mittels wenigstens einer Schweißnaht (13), befestigt ist und im Übrigen gegenüber dem Gehäuse (2) axial beweglich angeordnet ist, der gemessen vom zugehörigen axialen Ende der Kartusche (5) z.B. maximal 25% der gesamten axialen Länge der Kartusche (5) einnimmt.

11. Abgasbehandlungsvorrichtung nach einem der Ansprüche 1 bis 10,
**dadurch gekennzeichnet,**
**dass** das Gehäuse (2) einen Mantel (8) und wenigstens einen Außentrichter (9) aufweist, wobei zumindest ein solcher Außentrichter (9) mittels wenigstens einer Schweißnaht (26) am Mantel (8) befestigt sein kann.

12. Abgasbehandlungsvorrichtung nach Anspruch 11,
**dadurch gekennzeichnet,**
**dass** die wenigstens eine Schweißnaht (26) von den axialen Enden der Kartusche (5) axial beabstandet angeordnet ist, wobei die wenigstens eine Schweißnaht (26) bezüglich der Kartusche (5) in einem Längsbereich (28) angeordnet sein kann, der gemessen vom näheren axialen Ende der Kartusche (5) zwischen 20% und 50% der gesamten axialen Länge der Kartusche (5) einnimmt.

13. Abgasbehandlungsvorrichtung nach einem der Ansprüche 1 bis 12,
**dadurch gekennzeichnet,**
**dass** das Gehäuse (2) wenigstens zwei Gehäuseteile (11, 12) aufweist, die jeweils an der Kartusche (5) und über die Kartusche (5) aneinander oder mittels wenigstens einer gemeinsamen Schweißnaht (13) aneinander und an der Kartusche (5) befestigt sind, wobei wenigstens eines dieser Gehäuseteile (11, 12) aus zwei Halbschalen (15, 16) oder aus einem Stück hergestellt sein kann und einen Außentrichter (9) sowie einen Mantel (8) oder einen Mantelabschnitt (14) aufweisen kann.

14. Abgasbehandlungsvorrichtung nach einem der Ansprüche 1 bis 13,
**dadurch gekennzeichnet,**
**dass** der wenigstens eine Abgasbehandlungseinsatz (3) ein Katalysatorelement oder ein Partikelfilterelement oder ein Schalldämpferelement oder eine Kombination aus wenigstens zwei dieser Elemente ist.

## Claims

1. An exhaust gas treatment device for an exhaust system (4) of an internal combustion engine, more preferably in a motor vehicle,
- with a housing (2) in which at least one exhaust gas treatment insert (3) is arranged,
- wherein a cartridge (5) is provided which is arranged in the housing (2) and in which the at least one exhaust gas treatment insert (3) is mounted,
**characterized**
- **in that** the cartridge (5) consists of ferritic material,
- **in that** the housing (2) at least in one end section provided for the connecting of the exhaust gas treatment device (1) to the exhaust system (4) consists of an austenitic material.

2. The exhaust gas treatment device according to Claim 1,
**characterized in that**
the housing (2) comprises at least one outer funnel (9) which consists of an austenitic material.

3. The exhaust gas treatment device according to Claim 1 or 2,
**characterized in that**
the housing (2) comprises a jacket (8) which consists of an austenitic or a ferritic material.

4. The exhaust gas treatment device according to any one of the Claims 1 to 3,
**characterized in that**
at least one weld seam (13, 26), which connects a component (9, 8) of the exhaust gas treatment device of austenitic material with a component (8, 5) of the exhaust gas treatment device of ferritic material, consists of a weld material whose thermal expansion coefficient lies between the thermal expansion coefficients of the austenite material and the ferrite material.

5. The exhaust gas treatment device according to any one of the Claims 1 to 4,
**characterized in that**
the cartridge (5) is manufactured of one piece.

6. The exhaust gas treatment device according to any one of the Claims 1 to 5,
**characterized in that**
the cartridge (5) comprises at least one inner funnel (17) arranged in the interior of the housing (2).

7. The exhaust gas treatment device according to any one of the Claims 1 to 6,
**characterized in that**
the cartridge (5) comprises at least one ring collar (21) which stands away radially to the inside.

8. The exhaust gas treatment device according to any one of the Claims 1 to 7,
**characterized in that**
the cartridge (5) is fastened to the housing (2) by means of at least one weld seam (13) which can be arranged axially spaced from the axial ends of the cartridge (5).

9. The exhaust gas treatment device according to Claim 8,
**characterized in that**
the at least one weld seam (13) is arranged in an axially middle region (19) of the cartridge (5), which for instance amounts to a maximum of 50% or a maximum of 30% of the total axial length of the cartridge (5).

10. The exhaust gas treatment device according to any one of the Claims 1 to 8,
**characterized in that**
the cartridge (5) in one of its axial end regions (23) is fastened to the housing (2), more preferably by means of at least one weld seam (13) and otherwise is arranged axially moveable relative to the housing (2), which measured from the corresponding axial end of the cartridge (5) for example takes up a maximum of 25% of the total axial length of the cartridge (5).

11. The exhaust gas treatment device according to any one of the Claims 1 to 10,
**characterized in that**
the housing (2) comprises a jacket (8) and at least one outer funnel (9), wherein at least one such outer funnel (9) can be fastened to the jacket (8) by means of at least one weld seam (26).

12. The exhaust gas treatment device according to Claim 11,
**characterized in that**
the at least one weld seam (26) is arranged axially spaced from the axial ends of the cartridge (5), wherein the at least one weld seam (26) with regard to the cartridge (5) can be arranged in a longitudinal region (28) which measured from the nearer axial end of the cartridge (5) takes up between 20% and 50% of the total axial length of the cartridge (5).

13. The exhaust gas treatment device according to any one of the Claims 1 to 12,
**characterized in that**
the housing (2) comprises at least two housing parts (11, 12), each of which are fastened to the cartridge (5) and via the cartridge (5) to one another or by means of at least a common weld seam (13) to one another and to the cartridge (5), wherein at least one of these housing parts (11, 12) can be manufactured of two half shells (15, 16) or of one piece and can comprise an outer funnel (9) as well as a jacket (8) or a jacket section (14).

14. The exhaust gas treatment device according to any one of the Claims 1 to 13,
**characterized in that**
the at least one exhaust gas treatment insert (3) is a catalytic converter element or a particle filter element or a silencer element or a combination of at least two of these elements.

## Revendications

1. Dispositif de traitement de gaz d'échappement pour une installation d'échappement (4) d'un moteur à combustion interne, en particulier dans un véhicule automobile,
- avec un boîtier (2), dans lequel est disposé au moins un insert de traitement de gaz d'échappement (3),
- une cartouche (5) étant prévue, laquelle est disposée dans le boîtier (2) et dans laquelle est logé au moins un insert de traitement de gaz d'échappement (3),
**caractérisé en ce que**
- la cartouche (5) est à base de matériau ferritique,
- **en ce que** le boîtier (2) est à base d'un matériau austénitique au moins dans une partie d'extrémité prévue pour le raccordement du dispositif de traitement de gaz d'échappement (1) à l'installation d'échappement (4).

2. Dispositif de traitement de gaz d'échappement selon la revendication 1,
**caractérisé en ce que**
le boîtier (2) présente au moins un entonnoir extérieur (9) qui est à base d'un matériau austénitique.

3. Dispositif de traitement de gaz d'échappement selon la revendication 1 ou 2,
**caractérisé en ce que**
le boîtier (2) présente une enveloppe (8) qui est à base d'un matériau austénitique ou d'un matériau ferritique.

4. Dispositif de traitement de gaz d'échappement selon l'une quelconque des revendications 1 à 3,
**caractérisé en ce que**
au moins une soudure (13, 26), qui relie un composant (9, 8) du dispositif de traitement de gaz d'échappement à base de matériau austénitique à un composant (8, 5) du dispositif de traitement de gaz d'échappement à base de matériau ferritique, est à base d'un matériau de soudure, dont le coefficient de dilatation thermique se situe entre les coefficients de dilatation thermique du matériau austénitique et du matériau ferritique.

5. Dispositif de traitement de gaz d'échappement selon l'une quelconque des revendications 1 à 4,
**caractérisé en ce que**
la cartouche (5) est fabriquée d'une seule pièce.

6. Dispositif de traitement de gaz d'échappement selon l'une quelconque des revendications 1 à 5,
**caractérisé en ce que**
la cartouche (5) présente au moins un entonnoir intérieur (17) disposé à l'intérieur du boîtier (2).

7. Dispositif de traitement de gaz d'échappement selon l'une quelconque des revendications 1 à 6,
**caractérisé en ce que**
la cartouche (5) présente au moins une collerette annulaire (21) débordant radialement vers l'intérieur.

8. Dispositif de traitement de gaz d'échappement selon l'une quelconque des revendications 1 à 7,
**caractérisé en ce que**,
la cartouche (5) est fixée sur le boîtier (2) au moyen d'au moins une soudure (13) qui peut être disposée espacée axialement des extrémités axiales de la cartouche (5).

9. Dispositif de traitement de gaz d'échappement selon la revendication 8,
**caractérisé en ce que**
la soudure (13) au nombre minimum de un est disposée dans une zone (19) centrale axialement de la cartouche (5), qui représente par exemple au maximum 50 % ou au maximum 30 % de la longueur axiale totale de la cartouche (5).

10. Dispositif de traitement de gaz d'échappement selon l'une quelconque des revendications 1 à 8,
**caractérisé en ce que**
la cartouche (5) est fixée dans l'une de ses zones d'extrémité (23) axiales sur le boîtier (2), en particulier au moyen d'au moins une soudure (13), et est disposée par ailleurs de façon mobile axialement en face du boîtier (2), laquelle zone occupe, mesurée à partir de l'extrémité axiale spécifique de la cartouche (5), par exemple au maximum 25 % de la longueur axiale totale de la cartouche (5).

11. Dispositif de traitement de gaz d'échappement selon l'une quelconque des revendications 1 à 10,
**caractérisé en ce que**
le boîtier (2) présente une enveloppe (8) et au moins un entonnoir extérieur (9), au moins un tel entonnoir extérieur (9) pouvant être fixé au moyen d'au moins une soudure (26) sur l'enveloppe (8).

12. Dispositif de traitement de gaz d'échappement selon la revendication 11,
**caractérisé en ce que**
la soudure (26) au nombre minimum de un est disposée espacée axialement des extrémités axiales de la cartouche (5), la soudure (26) au nombre minimum de un pouvant être disposée dans une zone longitudinale (28) par rapport à la cartouche (5), laquelle zone occupe, mesurée à partir de l'extrémité axiale plus proche de la cartouche (5), entre 20 % et 50 % de la longueur axiale globale de la cartouche (5).

13. Dispositif de traitement de gaz d'échappement selon l'une quelconque des revendications 1 à 12,
**caractérisé en ce que**
le boîtier (2) présente au moins deux parties de boîtier (11, 12), qui sont fixées respectivement sur la cartouche (5) et au moyen de la cartouche (5) l'une contre l'autre ou au moyen d'au moins une soudure (13) commune l'une contre l'autre et sur la cartouche (5), au moins l'une de ces parties de boîtier (11, 12) pouvant être fabriquée à partir de deux demi-coques (15, 16) ou d'une seule pièce et pouvant présenter un entonnoir extérieur (9) ainsi qu'une enveloppe (8) ou une partie d'enveloppe (14).

14. Dispositif de traitement de gaz d'échappement selon l'une quelconque des revendications 1 à 13,
**caractérisé en ce que**
l'insert de traitement de gaz d'échappement (3) au nombre minimum de un est un élément catalyseur ou un élément de filtre à particules ou un élément de silencieux ou une combinaison d'au moins deux de ces éléments.
